# EUROPÄISCHE PATENTSCHRIFT

(11) **EP 3 458 841 B1**
(45) Veröffentlichungstag und Bekanntmachung des Hinweises auf die Patenterteilung: **31.03.2021**
(21) Anmeldenummer: 17726709.3
(22) Anmeldetag: 19.05.2017
(51) Int. Cl.: G01N 21/64

(54) **LASERMIKROSKOP MIT ABLATIONSFUNKTION**
LASER MICROSCOPE WITH ABLATION FUNCTION
MICROSCOPE LASER AVEC FONCTION D'ABLATION

(30) Priorität: 20.05.2016 DE 102016109303
(43) Veröffentlichungstag der Anmeldung: 27.03.2019
(73) Patentinhaber: Leibniz-Institut für Photonische Technologien e.V., 07745 Jena (DE); Friedrich-Schiller-Universität Jena, 07743 Jena (DE)
(72) Erfinder: POPP, Jürgen, 07751 Jena-Kunitz (DE); SCHMITT, Michael, 07749 Jena (DE); MEYER-ZEDLER, Tobias, 07745 Jena (DE); NOLTE, Stefan, 07751 Jena (DE); ACKERMANN, Roland, 99102 Klettbach (DE); LIMPERT, Jens, 07751 Jena (DE)
(74) Vertreter: Maiwald Patent- und Rechtsanwaltsgesellschaft mbH
(86) Internationale Anmeldenummer: PCT/IB2017/052962
(87) Internationale Veröffentlichungsnummer: WO 2017/199211

(56) Entgegenhaltungen:
- EP-A2- 1 784 633
- DE-A1-102005 044 422
- US-A1- 2008 315 119
- US-A1- 2009 290 150
- US-A1- 2010 177 307
- US-A1- 2016 103 072
- MINAMIKAWA T ET AL: "Real-time imaging of laser-induced membrane disruption of a living cell observed with multifocus coherent anti-Stokes Raman scattering microscopy", JOURNAL OF BIOMEDICAL OPTICS,, Bd. 16, Nr. 2, 14. Februar 2011 (2011-02-14), XP002773375,
- WOKOSIN D L ET AL: "OPTICAL WORKSTATION WITH CONCURRENT, INDEPENDENT MULTIPHOTON IMAGING AND EXPERIMENTAL LASER MICROBEAM CAPABILITIES", REVIEW OF SCIENTIFIC INSTRUMENTS, AIP, MELVILLE, NY, US, Bd. 74, Nr. 1, PART 01, 1. Januar 2003 (2003-01-01), Seiten 193-201, XP001141974, ISSN: 0034-6748, DOI: 10.1063/1.1524716
- HA T ET AL: "Dual-Molecule Spectroscopy: Molecular Rulers for the Study of Biological Macromolecules", IEEE JOURNAL OF SELECTED TOPICS IN QUANTUM ELECTRONICS, IEEE SERVICE CENTER, PISCATAWAY, NJ, US, Bd. 2, Nr. 4, 1. Dezember 1996 (1996-12-01), XP011062140, ISSN: 1077-260X

## Beschreibung

Die Erfindung betrifft ein Lasermikroskop, mit dem eine Probe sowohl mit bildgebenden, v.a., nichtlinear-optischen Verfahren untersucht als auch durch Abtragen von Material gezielt modifiziert werden kann, sowie ein Verfahren zum Betreiben.

### Stand der Technik

Bei der Lasermikroskopie wird ein Laserstrahl mit einer Scanoptik über die Oberfläche der zu untersuchenden Probe gerastert. Dabei ist die räumliche Auflösung des beleuchteten Bereichs auf der Probe beugungsbegrenzt. Durch die Nutzung nichtlinearer optischer Effekte wird die Auflösung erhöht, da nur in der Region mit höchster Lichtintensität ein Signal generiert wird. Der Durchmesser dieser Region ist für nichtlineare Effekte der Ordnung n um den Faktor n^{-1/2} verkleinert.

Die Nutzung nichtlinearer Effekte für die Bildgebung bedingt zugleich den Übergang von kontinuierlicher zu gepulster Beleuchtung. Die Effekte hängen quadratisch oder mit noch höherer Potenz von der Lichtintensität ab, so dass sie erst ab einer gewissen Mindestintensität ein brauchbares Signal liefern. Diese Intensität auf Dauer wirken zu lassen würde einen sehr hohen technischen Aufwand erfordern und die Probe zugleich durch Erwärmung zerstören. Daher wird die Laserenergie in kurzen Pulsen mit hoher Momentanintensität aufkonzentriert, wobei die mittlere in der Probe deponierte Leistung so gewählt wird, dass die Probe nicht unzulässig stark erwärmt wird.

Derartige Lasermikroskope sind beispielsweise aus (T. Meyer, M. Baumgartl, T. Gottschall, T. Pascher, A. Wuttig, C. Matthäus, B. F. M. Romeike, B. R. Brehm, J. Limpert, A. Tünnermann, O. Guntinas-Lichius, B. Dietzek, M. Schmitt, J. Popp, "A compact microscope setup for multimodal nonlinear imaging in clinics and its application to disease diagnostics", Analyst 138 (14), 4048-57 (2013)) sowie (T. Meyer, M. Chemnitz, M. Baumgartl, T. Gottschall, T.Pascher, C. Matthäus, B. F. M. Romeike, B. R. Brehm, J. Limpert, A. Tünnermann, M. Schmitt, B. Dietzek, J. Popp, "Expanding Multimodal Microscopy by High Spectral Resolution Coherent Anti-Stokes Raman Scattering Imaging for Clinical Disease Diagnostics", Analytical Chemistry 85, 6703-6715 (2013)) bekannt. Diese Mikroskope kombinieren die kohärente Raman-Streuung, d.h. stimulierte Raman-Streuung (stimulated Raman scattering, SRS) und kohärente anti-Stokes Raman-Streuung (coherent anti-Stokes Raman scattering, CARS), die Zwei-Photonen-Fluoreszenz (two-photon excited fluorescence, TPEF) und die Nutzung der zweiten Harmonischen des Anregungslichts (second-harmonic generation, SHG) und bei Bedarf auch höherer Harmonischer. Eine derartige multimodale Bildgebung ist in zweierlei Hinsicht vorteilhaft: Zum Einen kann ein molekülspezifischer Kontrast erzeugt werden, mit dem sich beispielsweise in der klinischen Diagnostik krankhaft verändertes Gewebe von gesundem Gewebe unterscheiden lässt. Zum Anderen bedingt die nichtlineare Abhängigkeit der genannten Effekte von der Lichtintensität, dass vom typischerweise Gauß-verteilten räumlichen Intensitätsprofil des Pulses nur das Zentrum mit der höchsten Intensität zur Bildgebung beiträgt. Die Ortsauflösung ist also besser als dies auf Grund der Beugungsgrenze zu erwarten wäre.

US 2008/315 119 A1 offenbart ein Verfahren zur Fotomodifikation einer Probe, bei dem die Probe bestrahlt wird und basierend auf der bestrahlten Probe eines oder mehrere Signale erfasst werden. Basierend auf einer Analyse der detektierten Signale werden die Beleuchtungsparameter angepasst, so dass Änderungen während des Experiments interaktiv vorgenommen werden können.

(T. Minamikawa, H. Niioka, T. Araki, M. Hashimoto, "Real-time imaging of laserinduced membrane disruption of a living cell observed with multifocus coherent anti-Stokes Raman scattering microscopy", Journal of Biomedical Optics 16 (2), 021111 (2011)) offenbart die Echtzeit-Bildgebung der laserinduzierten Zerstörung von Zellmembranen in einem lebenden Organismus sowie die zelluläre Reaktion mit einem Multifokus-CARS-Mikroskop. Wenn die Zellmembran im Brennpunkt eines nahinfraroten gepulsten Laserstrahls zerstört wird, verschwindet der von der Zellmembran herrührende CARS-Signalbeitrag, und ein neuer, von einer Anhäufung von Lipiden herrührender CARS-Signalbeitrag erscheint.

US 2009/290 150 A1 offenbart ein Lasermikroskop für die simultane Bildgebung mittels CARS und Multiphoton-Fluoreszenz.

DE 10 2005 044422 A1 offenbart ein weiteres CARS-Mikroskop mit verbesserter Unterdrückung des nicht-resonanten CARS-Signaluntergrundes.

US 2016/103 072 A1 offenbart eine Methode zur Beobachtung von Zellen, bei der unter anderem festgestellt wird, welche Zellen in der Probe noch lebendig sind.

US 2010/177 307 A1 offenbart eine optische Anordnung mit einem optisch parametrischen Oszillator, der synchron gepumpt wird, um korrelierte Pulspaare eines Signalstrahls und eines Leerlaufstrahls zu erzeugen. Die Phasen dieser korrelierten Pulse sind mit der Phase des Pumpstrahls verriegelt.

### Aufgabe und Lösung

Es ist die Aufgabe der vorliegenden Erfindung, die bekannten Lasermikroskope um eine Arbeitsmöglichkeit im Nahinfrarot-Spektralbereich sowie um die Möglichkeit, die Probe lokal mit hoher Präzision zu modifizieren, zu erweitern.

Diese Aufgabe wird erfindungsgemäß gelöst durch ein Lasermikroskop mit Laserquelle gemäß Hauptanspruch und durch ein Verfahren zum Betreiben gemäß Nebenanspruch. Weitere vorteilhafte Ausgestaltungen ergeben sich aus den darauf rückbezogenen Unteransprüchen.

### Gegenstand der Erfindung

Im Rahmen der Erfindung wurde ein Lasermikroskop mit Laserquelle entwickelt. Dieses Lasermikroskop umfasst mindestens eine erste Laserquelle, die mindestens einen, insbesondere gepulsten, Anregungsstrahl emittiert, eine Scanoptik, die zum Rastern des Anregungsstrahls über die Oberfläche einer Probe ausgebildet ist, eine Fokussieroptik, die zur Fokussierung des Anregungsstrahls auf die Probe ausgebildet ist, sowie mindestens einen Detektor für Licht, das die Probe auf Grund eines optischen Effekts in Antwort auf den Anregungsstrahl emittiert. Das Lasermikroskop kann beispielsweise für die multimodale Bildgebung ausgebildet sein.

Der optische Effekt kann ein linearer Effekt sein. Die Abbildung kann dann besonders schnell erfolgen, weil viel Signalintensität zur Verfügung steht. Besonders vorteilhaft ist der optische Effekt jedoch nichtlinear, d.h., der Detektor ist auf Licht sensitiv, das die Probe auf Grund eines nichtlinearen optischen Effekts in Antwort auf den Anregungsstrahl emittiert. Dann kommt diese Antwort im Wesentlichen aus dem zentralen Bereich des Strahlprofils des Anregungsstrahls, in dem die momentane Intensität maximal ist.

Erfindungsgemäß ist zwecks lokaler Ablation des Materials der Probe eine zweite Laserquelle für einen gepulsten Ablationsstrahl vorgesehen, wobei der Ablationsstrahl über die Scanoptik und die Fokussieroptik zur Probe geführt ist.

Das Lasermikroskop nutzt nichtlineare bildgebende Verfahren wie SRS, CARS, SHG und/oder TPEF.

Es wurde erkannt, dass diese Kombination es ermöglicht, aus einem abgebildeten Bereich Strukturen auszuwählen und nur diese Strukturen hochselektiv zu ablatieren. Dass zum Ablatieren eine deutlich größere Intensität erforderlich ist als für die Bildgebung, bedingt nicht, dass die Ortsauflösung beim Ablatieren schlechter sein muss als bei der Bildgebung. Durch geeignete Wahl der Laserparameter können die Pulse des Ablationsstrahls so gestaltet werden, dass sie in der Probe unmittelbar mit den Elektronenhüllen der Atome des Probenmaterials wechselwirken und diese ionisieren. Dadurch wird das Probenmaterial lokal verdampft, indem die Elektronen in ein Plasma überführt werden. Ist der Ablationspuls kurz genug, wechselwirkt er nur auf diese Weise mit dem Probenmaterial, so dass insbesondere keine Wärme in Form von Anregungszuständen in der Probe deponiert wird. Dabei erfordert die Ionisation der Elektronenhüllen eine so große Momentanintensität, wie sie nur im unmittelbaren Zentrum der räumlichen Intensitätsverteilung des Ablationspulses herrscht. Die Ortsauflösung der Ablation ist also mindestens genauso gut wie die Ortsauflösung der Bildgebung, wenn nicht sogar besser.

Sowohl der Anregungsstrahl als auch der Ablationsstrahl haben nicht nur lateral, also in der Ebene senkrecht zur Ausbreitungsrichtung, eine inhomogene Intensitätsverteilung. Vielmehr schwankt die Intensität auch jeweils in der Ausbreitungsrichtung. Dadurch ist das Zentrum der größten Intensität jeweils nicht nur lateral, sondern auch in der Ausbreitungsrichtung stark lokalisiert. Das ablatierte Volumen ist in der Größenordnung von Einzelzellen, ca. 1pl (Pikoliter). Der abgebildete bzw. ablatierte Bereich kann also nicht nur lateral, sondern auch in Bezug auf die Tiefe unterhalb der Oberfläche der Probe selektiert werden. Somit können beispielsweise Strukturen innerhalb einer biologischen Probe untersucht und gezielt verändert werden, ohne die Oberfläche der Probe am Ort dieser Strukturen zunächst destruktiv öffnen zu müssen. Sowohl der Anregungs- als auch der Ablationsstrahl können beispielsweise bis zu einigen 100 µm tief in die Probe eindringen.

Dabei sorgt die gemeinsame Führung des Anregungsstrahls und des Ablationsstrahls über die gleiche Scanoptik und Fokussieroptik zum Einen dafür, dass ein systematischer Versatz zwischen den Punkten, an denen beide Strahlen auf der Probe eintreffen, minimiert wird. Zum Anderen wird auch der Aufwand für die Justage minimiert. Dadurch setzt der erfolgreiche Einsatz des Lasermikroskops nicht mehr voraus, dass der Benutzer ein Experte auf dem Gebiet der Lasermikroskopie ist. Vielmehr ist das Lasermikroskop einschließlich der neuen Ablationsfunktion auch Benutzern zugänglich, die lediglich Experten in Bezug auf die Interpretation der Bilder sind, wie beispielsweise Ärzte oder Biologen beim Einsatz in der klinischen Diagnostik. Insbesondere für derartige Anwendungen ist es weiterhin vorteilhaft, dass die gemeinsame Nutzung der Scanoptik und Fokussieroptik für die Anregung und für die Ablation die Integration beider Funktionen in ein kompaktes Gerät ermöglicht.

Bei der nichtlinearen Bildgebung werden durch Photonen des Anregungsstrahls Anregungszustände im Probenmaterial gewechselt. Hierzu muss die Energie des Photons zur Energiedifferenz zwischen den Anregungszuständen passen. Daher benötigt die Bildgebung einen Anregungsstrahl mit einer oder mehreren spezifischen Wellenlängen, die auf das Probenmaterial und auf den für die Bildgebung zu verwendenden Effekt abgestimmt sind. Durch die nichtlineare Bildgebung können sowohl Bildgebung als auch Ablation mit NIR-Lasern erfolgen, wobei die bildgebenden Verfahren Signale im sichtbaren Bereich generieren. Dadurch können die gleichen Optiken für beide Aufgaben verwendet werden.

Die Erfinder haben erkannt, dass im Gegensatz hierzu die nichtlineare Ablation im Wesentlichen von der Wellenlänge des Ablationsstrahls unabhängig ist. Die teilweise Ionisation der Elektronenhüllen von Atomen des Probenmaterials wird unmittelbar durch das momentane elektrische Feld bewirkt, das auf die Elektronen wirkt. Auf die Schwingungsfrequenz dieses elektrischen Feldes, und somit auf die Wellenlänge des Ablationsstrahls, kommt es somit gar nicht an. Diese Wellenlänge ist also frei nach praktischen bzw. apparativen Erwägungen wählbar, insbesondere im Nahinfrarot (NIR)-Bereich, um in Gewebe eine hohe Eindringtiefe zu ermöglichen.

Dass der Anregungsstrahl einerseits und der Ablationsstrahl andererseits somit in qualitativ völlig unterschiedlicher Weise mit der Probe wechselwirken, bedingt somit, dass die Pulse des Ablationsstrahls deutlich kürzer sein müssen als die Pulse des Anregungsstrahls, um eine niedrige mittlere Leistung zu gewährleisten, so dass durch den Ablationslaser keine Schädigung außerhalb des Fokus auftritt. Die maximale Momentanintensität eines Ablationspulses ist typischerweise etwa um einen Faktor 1000 größer als die maximale Momentanintensität eines Anregungspulses. Dementsprechend kann ein Ablationspuls beispielsweise eine Pulsenergie im Bereich zwischen 0,1 µJ und 10 µJ haben bei 100 fs Pulsdauer, während ein Anregungspuls beispielsweise lediglich eine Pulsenergie im Bereich zwischen 1 nJ und 10 nJ haben kann bei etwa 10 ps Pulsdauer.

Ein besonderer Vorteil der Integration von Lasermikroskop und Ablationswerkzeug in einem Gerät liegt darin, dass die Ablation jederzeit unterbrochen und durch Anfertigung einer neuen Mikroskopaufnahme visuell kontrolliert werden kann bzw. permanent während der Ablation Bilder des Vorgangs aufgenommen werden können. Auf diese Weise besteht eine Online-Kontrolle hinsichtlich der Selektivität, mit der das Probenmaterial abgetragen wird.

In einer besonders vorteilhaften Ausgestaltung der Erfindung ist mindestens eine von der zweiten Laserquelle emittierte Wellenlänge mit mindestens einer von der ersten Laserquelle emittierten Wellenlänge deckungsgleich. Die Refraktion von Licht an der Scanoptik ist ebenso wie die Fokussierung von Licht durch die Fokussieroptik wellenlängenabhängig. Ein Anregungsstrahl und ein Ablationsstrahl mit verschiedenen Wellenlängen, die in einem gemeinsamen Strahlengang in die Scanoptik geführt sind, können also zueinander chromatisch verschoben werden und mit einem räumlichen Versatz zueinander auf der Probe eintreffen. Diese chromatische Verschiebung wird minimiert, wenn die Wellenlängen beider Strahlen identisch sind.

Alternativ können beide Strahlen auch unterschiedliche Wellenlängen aufweisen. Sie können dann insbesondere über einen dichromatischen Strahlteiler mit nur geringen Intensitätsverlusten zusammengeführt sein.

In einer weiteren besonders vorteilhaften Ausgestaltung der Erfindung schließen die Polarisationsrichtungen der ersten Laserquelle und der zweiten Laserquelle einen Winkel zwischen 70 und 110 Grad ein. Bevorzugt sind beide Polarisationsrichtungen zueinander orthogonal. Der Anregungsstrahl und der Ablationsstrahl können dann insbesondere über einen polarisationserhaltenden Strahlteiler mit nur geringen Intensitätsverlusten zusammengeführt sein. Die Wechselwirkung beider Strahlen insbesondere mit biologischen Proben, die keine kristalline Vorzugsrichtung aufweisen, ist in der Regel von der Polarisationsrichtung unabhängig. Weiterhin führen unterschiedliche Polarisationsrichtungen des Anregungsstrahls und des Ablationsstrahls beim Durchgang durch die Scanoptik und die Fokussieroptik nicht zu einem Versatz zwischen den Orten, an denen beide Strahlen auf der Probe eintreffen.

Die erste Laserquelle und die zweite Laserquelle sind von einem gemeinsamen Dauerstrich-Pumplaser oder einer gemeinsamen gepulsten Pumplaserquelle gespeist. Dabei kann insbesondere der Strahl aus dem gemeinsamen Dauerstrich-Pumplaser in einen optischen Oszillator geführt sein, der insbesondere auch ein faseroptischer Oszillator sein kann, und es kann ein Strahlteiler zur Aufteilung des vom optischen Oszillator emittierten gepulsten Strahls in den Anregungsstrahl einerseits und in den Ablationsstrahl andererseits vorgesehen sein. Durch die gemeinsame Nutzung von Komponenten für den Anregungsstrahl einerseits und für den Ablationsstrahl andererseits können Kosten, Bauraum und Energieverbrauch eingespart werden. Durch Verwendung faseroptischer Komponenten kann weiter Bauraum eingespart werden. Weiterhin wird die Justage wesentlich vereinfacht. Sollten auf Grund der Verfügbarkeitssituation am Markt zwei getrennte optische Oszillatoren für die beiden energetisch stark unterschiedlichen Strahlen preiswerter sein als ein für beide Strahlen gleichermaßen geeigneter Oszillator, so kann es auch vorteilhaft sein, zwei getrennte Oszillatoren einzusetzen.

Der Anregungsstrahl ist durch ein spektrales Filter geführt. Hat beispielsweise der vom optischen Oszillator emittierte gepulste Strahl die für den Ablationsstrahl vorgesehene sehr kurze Pulsdauer, so bewirkt das spektrale Filter auf Grund der Heisenberg'schen Unschärferelation, dass die Pulse des Anregungsstrahls deutlich verlängert werden. Zugleich kann das spektrale Filter auch Anteile des Anregungsstrahls, die nicht zum Wechsel von Anregungszuständen in der Probe geeignet sind und somit nur zur Erwärmung der Probe beitragen, von der Probe fernhalten.

Die erste Laserquelle emittiert Pulse mindestens zweier verschiedener Wellenlängen. Insbesondere kann die erste Laserquelle Pulse dreier unterschiedlicher Wellenlängen emittieren. Eine solche Laserquelle ist besonders geeignet für kohärente Anti-Stokes-Raman-Streuung. Zu diesem Zweck haben zwei der emittierten Wellenlängen vorteilhaft eine Differenz, die zur Anregung mindestens eines Schwingungszustandes in einem Molekül des Probenmaterials passt. Beispielsweise kann eine erste emittierte Wellenlänge im Bereich zwischen 1025 nm und 1075 nm durchstimmbar sein, und eine zweite emittierte Wellenlänge kann im Bereich zwischen 800 nm und 1000 nm durchstimmbar sein. Die unterschiedlichen Wellenlängen können beispielsweise durch eine Vier-Wellen-Mischung von Wellenlängen, die symmetrisch um die Wellenlänge eines als Energiequelle verwendeten Pumplasers verteilt sind, erzeugt werden. Hierfür sind beispielsweise Ytterbium-dotierte Faserlaser geeignet. Die Vierwellenmischung findet in einer photonischen Kristallfaser statt. Die zweite Laserquelle kann beispielsweise ebenfalls ein solcher Faserlaser sein, dessen Wellenlänge beispielsweise im Bereich zwischen 1030 nm und 1060 nm durchstimmbar ist.

Vorteilhaft ist somit der Detektor dazu ausgebildet, aus dem Anregungsstrahl durch kohärente Raman-Streuung, insbesondere stimulierte Raman-Streuung (SRS) und/oder durch Anti-Stokes-Raman-Streuung, gebildetes Licht zu detektieren.

Dabei ist die oben beschriebene Laserquelle besonders gut für die SRS-Bildgebung geeignet. Zur Detektion von SRS werden Modulationen des Pumplasers durch die nichtlineare Raman-Wechselwirkung in der Probe auf den Stokeslaser oder umgekehrt übertragen. Der Modulationsübertrag ist sehr klein, typischerweise unter 10⁻⁴ der Laserintensität. Daher werden einerseits besonders rauscharme Laser benötigt, und andererseits müssen weitere Störquellen unterdrückt werden.
a) Hierzu sind insbesondere Laserpulse im 10 ps-Pulsbereich optimal, da ein wichtiges Störsignal von SRS die Kreuzphasenmodulation ist, die proportional zur Zeitableitung der Feldstärke des Pulses ist. Daher ist das Störsignal für lange Pulse wesentlich geringer.
b) Weiterhin ist es vorteilhaft, einen stabilen Laser zu nutzen. Wenn der Modulationsübertrag auf den Yb-Faserlaser beobachtet wird, ist das besonders günstig, weil zur Erzeugung dieses Laserlichts keine nichtlinearen Effekte genutzt werden und daher das Rauschen minimal ist. Die Nutzung des Signals oder Idlers, der durch Vierwellenmischung erzeugt wird, wäre weniger günstig.
c) Es ist weiterhin vorteilhaft, nicht den Pumplaser zu detektieren, denn hier können Störsignale durch transiente Absorption auftreten. Bei SRS-Detektion auf dem Pumplaser wird SRL detektiert, was TA-Signalen äquivalent ist (stimulated Raman Loss). Diese Störsignale sind durch NIR-Laser und durch Detektion von Raman-Gain beim Stokes Laser statt Raman Loss vermeidbar.
d) Weiterhin ist es vorteilhaft, einen Laser mit (nahezu) fester Zentralfrequenz zu nutzen. Bei Verwendung des Yb-Lasers kann das SRS-Signal auch beim Durchstimmen der Raman-Resonanz detektiert werden, da die Yb-Wellenlänge um ca. 50 nm variiert wird, während die Signal-Wellenlängen in einem viel größeren Bereich von ca. 200 nm bzw. die Raman Resonanz von ca. 700-3300 cm⁻¹ durchgestimmt werden.

In einer weiteren besonders vorteilhaften Ausgestaltung der Erfindung beträgt die von der ersten Laserquelle, und/oder von der zweiten Laserquelle, emittierte Wellenlänge zwischen 750 nm und 3 µm, bevorzugt zwischen 750 nm und 2 µm und ganz besonders bevorzugt zwischen 750 nm und 1,5 µm. Dieser Wellenlängenbereich ist insbesondere für die Untersuchung und Modifikation biologischer Proben vorteilhaft, da Streuverluste im Gewebe minimiert werden und das Licht bis einige 100 µm tief in die Probe eindringen kann.

Die Erfindung bezieht sich auch auf ein Verfahren zum Betreiben eines Lasermikroskops, wobei in dem Lasermikroskop ein gepulster, Anregungsstrahl und ein gepulster Ablationsstrahl zu einer Probe geführt sind, wobei jeweils Mittel zum Rastern des Anregungsstrahls und des Ablationsstrahls über die Probe vorgesehen sind. In dem Lasermikroskop ist weiterhin mindestens ein Detektor für Licht, das die Probe auf Grund eines nichtlinearen optischen Effekts in Antwort auf den Anregungsstrahl emittiert, vorgesehen.

Erfindungsgemäß wird die Pulsdauer des Ablationsstrahls zwischen 35 fs und 300 fs, bevorzugt zwischen 100 fs und 300 fs, gewählt.

Es wurde erkannt, dass gerade bei einer Pulsdauer in diesem Bereich eine lokale Ablation des Probenmaterials erfolgen kann, ohne dass die Probe im Übrigen zu stark aufgeheizt wird. Wie zuvor erläutert, wird das Probenmaterial verdampft, indem das momentane elektrische Feld des Ablationspulses die Elektronenhüllen von Atomen des Probenmaterials teilweise ionisiert. Diese Wirkung tritt erst ab einer bestimmten Mindestfeldstärke ein, die ausreicht, um die Bindungsenergie zumindest der Außenelektronen zu überwinden. Diese Mindestfeldstärke korrespondiert zu einem Mindestwert für die Momentanintensität des Ablationspulses (in der Größenordnung 10¹²-10¹⁴ W/cm²). Die Momentanintensität muss im Verlauf des Ablationspulses so schnell in einer ansteigenden Flanke diesen Mindestwert erreichen und in einer abfallenden Flanke am Ende des Pulses wieder absinken, dass auf diesen Flanken jeweils noch keine anderweitige, insbesondere thermische, Wechselwirkung des Ablationspulses mit dem Probenmaterial stattfindet. Der Ablationspuls muss also auf einer schnelleren Zeitskala ansteigen und wieder abfallen, als erforderlich ist, um Schwingungen oder Rotationen in Molekülen des Probenmaterials anzuregen und auf diese Weise Wärme in das Probenmaterial einzukoppeln. Findet eine solche Anregung von Schwingungen statt, so wird die Probe mit hoher Wahrscheinlichkeit so stark erwärmt, dass sie zerstört wird. Die selektive Ablation beruht darauf, dass während der Phase des Pulses, in der eine direkte Ionisation der Elektronenhüllen von Atomen stattfindet, um mindestens eine Größenordnung mehr Energie in die Probe eingekoppelt wird als während der ansteigenden und abfallenden Flanken des Pulses, während derer die Momentanintensität nicht für die direkte Ionisation ausreicht. Wenn mit Pulsen gemäß der Erfindung Probenmaterial lokal ablatiert wird, kann dies beispielsweise schon mit mittleren Leistungen des Ablationsstrahls in der Größenordnung 1 mW erfolgen.

In einer besonders vorteilhaften Ausgestaltung der Erfindung wird die Pulsdauer des Anregungsstrahls für die Bildgebung um einen Faktor zwischen 10 und 1000 länger gewählt wird als die Pulsdauer des Ablationsstrahls. Auf diese Weise ist gewährleistet, dass der Anregungsstrahl zum Einen nicht durch direkte Ionisation Material ablatiert und dass zum Anderen genügend Zeit zur Verfügung steht, um durch die Wechselwirkung der Photonen des Anregungsstrahls mit der Probe einen bestimmten Anregungszustand in der Probe zu erzeugen. Der qualitative Unterschied zwischen den Wirkungen des Anregungsstrahls und des Ablationsstrahls beruht maßgeblich auf den unterschiedlichen Zeitskalen und Intensitätsskalen, auf denen diese Wirkungen stattfinden.

Vorteilhaft wird die Pulsdauer des Anregungsstrahls aus einem Bereich zwischen 1 ps und 100 ps, bevorzugt zwischen 5 ps und 40 ps und ganz besonders bevorzugt zwischen 10 ps und 20 ps, gewählt. In diesem Bereich ist die Justage des Anregungsstrahls am einfachsten. Weiterhin sind gerade die Bereiche zwischen 5 ps und 40 ps, bzw. zwischen 10 ps und 20 ps, besonders dann vorteilhaft, wenn der Anregungsstrahl durch mindestens eine optische Faser geführt ist, beispielsweise, wenn die erste Laserquelle ein Faserlaser ist. Optische Fasern haben typischerweise eine Dispersion um 10 ps pro Meter Länge für die beiden für die Bildgebung erforderlichen Wellenlängen. Ab etwa 10 ps Pulsdauer ist die Dispersion in der optischen Faser, kombiniert mit den Dispersionen in der Scanoptik und in der Fokussieroptik des Mikroskops, gering genug, um die Choreographie einer Spektroskopie mit Anregung durch einen Pump-Puls und Abfrage durch einen Abfrage-Puls (Pump-Probe-Spektroskopie) nicht mehr entscheidend zu beeinflussen, wenn Teile der Mikroskopoptiken wie z.B. Objektive, Scan-Linse, Tubuslinse oder Kondensor gewechselt werden. Der Bereich zwischen 5 ps und 40 ps ist darüber hinaus im Hinblick auf die durch die Heisenberg'sche Unschärferelation unmittelbar mit der Pulsdauer verkoppelte spektrale Auflösung optimal und gewährleistet gleichzeitig bei für die Bildgebung ausreichenden Pulsfolgefrequenzen über 1 MHz die für die nichtlinearen Prozesse notwendigen Pulsspitzenleistungen im kW-Bereich bei mittleren Leistungen im Bereich einiger 10 mW.

Vorteilhaft wird die Repetitionsrate der Pulse des Anregungsstrahls zwischen 1 MHz und 40 MHz, bevorzugt zwischen 1 MHz und 20 MHz, gewählt. Dieser Bereich ist ein optimaler Kompromiss zwischen einer möglichst großen Geschwindigkeit der Bildaufnahme einerseits und einer möglichst geringen Erwärmung der Probe andererseits. Für Video-Bildwiederholraten sind mind. 8 Mio. Pulse pro Sekunde erforderlich. Während bei der Ablation die in die Probe eingekoppelte Energie im Wesentlichen unmittelbar mit dem verdampften Material abgeführt wird und kaum Wärme in der Probe hinterlässt, erwärmt der Anregungsstrahl die Probe nach Maßgabe seiner mittleren Leistung. Für die Aufnahme eines jeden Bildpixels wird mindestens ein Puls des Anregungsstrahls benötigt. Je nach Signal-RauschVerhältnis des für die Bildgebung gewählten Effekts kann es auch vorteilhaft sein, mehrere Pulse des Anregungsstrahls pro Bildpixel vorzusehen, um eine bessere Statistik zu erhalten.

Vorteilhaft wird die Repetitionsrate der Pulse des Ablationsstrahls zwischen 100 kHz bis 10 MHz, bevorzugt zwischen 100 kHz und 1 MHz, gewählt. Zum Abtragen größerer Strukturen in kurzer Zeit kann der Ablationsstrahl beispielsweise so konfiguriert sein, dass jeder Puls in einem Gebiet wirksam ist, welches mehrere Bildpixel, beispielsweise etwa 10 Bildpixel, des mit dem Anregungsstrahl aufgenommenen Bildes umfasst. Der Ablationsstrahl kann dann schneller, d.h. in einem weitmaschigeren Netz von Gitterpunkten, über die Probe gerastert werden. Idealerweise setzen sich die Bereiche, in denen ein jeder Ablationspuls Material von der Probe abträgt, lückenlos zu der abzutragenden Struktur zusammen. Dabei kann während des Abtragens der Struktur beispielsweise auch der Fokusbereich des Ablationsstrahls in seiner Größe variiert werden, um etwa zunächst mit hoher Geschwindigkeit großflächige Strukturen abzutragen und anschließend feine Strukturen mit besserer Genauigkeit nachzuarbeiten.

Das Bildfeld des Lasermikroskops kann beispielsweise eine Fläche von 1 mm² aufweisen. Dabei ist typischerweise eine Ortsauflösung von besser als 1 µm lateral, also entlang der Oberfläche der Probe, erzielbar. Axial, also in der Tiefe unterhalb der Oberfläche der Probe, ist typischerweise eine Auflösung von besser als 5 µm erzielbar. Durch den Ablationsstrahl kann Material mit einer Auflösung von typischerweise um 1-1000 µm³ abgetragen werden.

In einer weiteren besonders vorteilhaften Ausgestaltung der Erfindung wird das durch Rastern des Anregungsstrahls erhaltene Bild durch Anwendung mindestens eines multivariaten Klassifizierers daraufhin ausgewertet, ob die Probe eine vorgegebene Struktur oder Eigenschaft aufweist. Hierfür können beispielsweise die in der auf die Anmelder zurückgehenden europäischen Patentanmeldung 15 200 864.5 offenbarten Klassifizierer verwendet werden.

Für viele Anwendungen steht ein großer Kanon multivariater Klassifizierer zur Verfügung. Aus diesem Kanon können die zu verwendenden Klassifizierer beispielsweise nach der benötigten Auswertungszeit selektiert werden, um die Auswertung innerhalb einer vorgegebenen Zeit abschließen zu können.

Weiterhin kann es in biologischen in-vivo-Anwendungen, in denen es zu Bewegungsartefakten kommen kann, Vorgaben für eine minimale Geschwindigkeit des Rasterns geben, um die Bewegungsartefakte zu minimieren. Eine erhöhte Geschwindigkeit kann dann damit einhergehen, dass vermehrt Rauschen auftritt. Dieses Rauschen kann sich auf unterschiedliche multivariate Klassifizierer unterschiedlich stark auswirken. Um die Verlässlichkeit der möglichen Klassifizierer unter dem Einfluss von Bildrauschen zu beurteilen, wird das durch Rastern des Anregungsstrahls erhaltene Bild in einer weiteren besonders vorteilhaften Ausgestaltung der Erfindung durch Überlagerung von Rauschen zu einem Testbild verändert. Aus dem Vergleich der Ergebnisse, die der Klassifizierer bei Anwendung auf das Bild einerseits und auf das Testbild andererseits liefert, wird die Verlässlichkeit des Klassifizierers ausgewertet.

So kann beispielsweise ein Klassifizierer, der schon bei geringfügigem zusätzlichem Rauschen seine Meinung ändert, als weniger verlässlich gewertet werden als ein Klassifizierer, der seine Meinung erst bei sehr starkem zusätzlichem Rauschen ändert. Die auf diese Weise bestimmte Verlässlichkeit wird typischerweise von Art und Stärke des Rauschens abhängen, die in dem vom Lasermikroskop aufgenommenen Bild enthalten ist. Das Rauschen wiederum hängt von der Geschwindigkeit der Bildaufnahme ab. Indem die Verlässlichkeit durch die Hinzufügung zusätzlichen Rauschens quantitativ überprüfbar ist, kann der Benutzer des Lasermikroskops einen optimalen Kompromiss zwischen der Geschwindigkeit der Bildaufnahme einerseits und der Nutzbarkeit möglichst vieler aussagekräftiger Klassifizierer andererseits wählen.

Das Verfahren wird mit einem Lasermikroskop der Erfindung durchgeführt. Das Lasermikroskop ist speziell dafür konzipiert, mit dem Verfahren gemäß der Erfindung betrieben zu werden, und umgekehrt.

Eine mögliche Anwendung des Lasermikroskops und des Verfahrens gemäß der Erfindung ist die SRS- bzw. CARS-geführte fs-Laserablation von Gewebe für mikrochirurgische Operationen, die auf der Kombination der multimodalen nichtlinearen Mikroskopie (SRS, CARS, TPEF, SHG), der stimulierten Raman-Streuungsmikroskopie (SRS-Mikroskopie) oder der kohärenten anti-Stokesschen-Raman-Streuungsmikroskopie (CARS-Mikroskopie) von Gewebe für eine lokale Diagnostik und Charakterisierung des Gewebes mit der gezielten Abtragung von Teilen des Gewebes durch fs-Laserablation beruht. Hauptkomponenten in dieser Anwendung sind das Verfahren der Datenerfassung und Datenaufarbeitung, die Kombination des bildgebenden Verfahrens mit einem Verfahren zur Gewebeabtragung sowie die dafür eingesetzte Laserquelle. Das Verfahren ermöglicht die Bildgebung und molekülsensitive Detektion von Zielstrukturen im Gewebe ohne die Verwendung externer Markersubstanzen und die anschließende präzise Abtragung der Zielstrukturen. Es lässt sich Gewebe bis in einige 100 µm Tiefe zerstörungsfrei und dreidimensional darstellen und Gewebe bis zu einige 100 µm unterhalb der Oberfläche gezielt abtragen, d.h., ohne dass eine offene Wunde entsteht. Dadurch kann das Infektionsrisiko wesentlich reduziert werden. Das Verfahren eignet sich für alle Körperregionen, die Mikroskopen zugänglich sind, z.B. Haut, sowie für chirurgische Eingriffe, die mit Operationsmikroskopen, z.B. im Hals-Nasen-Rachen-Bereich, flexiblen oder starren bildgebenden Endoskopen durchgeführt werden.

Die Anwendung kombiniert die markerfreie molekulare Bildgebung zur Lokalisation von krankheitsbedingten Gewebeanomalien mit der fs-Laserablation zur gezielten Abtragung. Damit wird die Diagnostik und Therapie in einem Gerät kombiniert, was zu einer schnelleren Behandlung beiträgt. Weiterhin erlaubt die fs-Laserablation eine wesentlich präzisere Entfernung von Zielstrukturen und ist perspektivisch auch in Endoskopen und Mikroendoskopen einsetzbar. Dadurch ist das Verfahren gerade in der Umgebung physiologisch wichtiger Gewebestrukturen, z.B. im Kehlkopf nahe den Stimmbändern oder im Gehirn, vorteilhaft.

Der bisherige Goldstandard beruhte auf der Entnahme und histologischen Aufarbeitung von Gewebebiopsien zur Diagnose der Krankheit und evtl. anschließender weiterer Operationen, wenn sich durch die Untersuchung der Verdacht auf eine ernstzunehmende Erkrankung erhärtete. Aus dem entnommenen Material wurden Gewebedünnschnitte angefertigt und histologisch gefärbt, vor allem mittels Hämatoxylin-Eosin-Färbung. Der angefärbte Gewebeschnitt wurde durch einen Pathologen beurteilt. Dieser etablierte Prozess war zeitaufwendig und konnte mehrere Tage in Anspruch nehmen. Die Genauigkeit konventioneller chirurgischer Eingriffe und Operationen war auf ca. 100 µm beschränkt.

Durch die zeitaufwendige Probenaufarbeitung konnte der OP-Erfolg nicht schon während der Operation geprüft werden, so dass z.T. kostenintensive Wiederholungs-OPs notwendig waren. Meist wurde großzügig Gewebe abgetragen, was das Infektionsrisiko steigerte und wichtige physiologische Strukturen schädigen konnte.

Hier stellt die Erfindung die Kombination eines markerfreien bildgebenden Verfahrens, das Moleküle direkt sichtbar machen kann, mit einem optischen Verfahren zur Gewebeabtragung bereit. Durch spezifische Laserparameter kann eine hohe Eindringtiefe von mehreren 100 µm sowohl für die Bildgebung als auch die Laserablation erreicht werden. Das Verfahren ist wesentlich schneller und genauer als herkömmliche Methoden.

Der neue Workflow unter Nutzung der Erfindung umfasst:
(i) Darstellung der Zielregion mit Hilfe der multimodalen nichtlinearen Mikroskopie, z.B. der kohärenten anti-Stokes Raman-Streuungsmikroskopie (bei einer oder mehreren Schwingungsfrequenzen) allein oder in Kombination mit der Zweiphotonenfluoreszenz und der zweiten Harmonischen
(ii) die multivariate Analyse der Bilddaten zur Erkennung der Zielregion für die Laserablation (basierend etwa auf der vorherigen europäischen Patentanmeldung 15 200 864.5) und
(iii) die lokale Abtragung von Zielgewebe und Gewebestrukturen in-vivo/excorpore-in-vivo/in-vitro/ex-vivo auch unterhalb einer intakten Gewebeschicht.

Die Hauptneuerung in diesem Workflow ist die Kombination der Gewebevermessung und Darstellung mit der multimodalen nichtlinearen Mikroskopie (z.B. SRS, CARS, TPEF, SHG) mit der Laserablation zur gezielten Gewebeabtragung. Das Laserscanning-Mikroskop in Kombination mit der kompakten Laserquelle für die SRS- und CARS-Bildgebung und die Laserablation ist in diesem Zusammenhang das wichtigste Instrument. Sowohl die Kombination beider Verfahren als auch die Konstruktion eines kompakten, luftgekühlten Hochleistungsablationslasers sind fundamental neu.

Weiterhin wurden weder die kohärente Raman-Mikroskopie noch die multimodale nichtlineare Mikroskopie bisher intraoperativ eingesetzt. Auch Anwendungen in Tierversuchen beschränken sich auf die Bildgebung. Eine Kopplung mit optischen Verfahren zur gezielten Gewebeabtragung und online-Kontrolle des Operationsfortschritts ist vollkommen neu.

Im Vergleich zur Nutzung der kohärenten Raman-Mikroskopie und der multimodalnichtlinearen Mikroskopie für die Schnellschnittdiagnostik, etwa gemäß der auf die Erfinder zurückgehenden europäischen Patentanmeldung 15 200 864.5, sind die folgenden Unterschiede wichtig:
- Untersuchung ausgedehnter intakter Gewebeproben, keine dünnen Schnellschnitte auf Objektträgern
- Detektion der Signale in Reflexion: da für ausgedehnte Gewebestrukturen keine Signaldetektion in Vorwärtsrichtung möglich ist, müssen die Signale in Rückwärtsrichtung erfasst werden
- Untersuchung von Gewebe in Echtzeit: da Bewegungsartefakte auftreten, werden die Untersuchungen mit höherer Geschwindigkeit im Vergleich zur histologischen Schnellschnittdiagnostik gemacht, dadurch ist mit höherem Rauschen zu rechnen und die automatisierte Datenanalyse wird auf wenige wichtige Parameter beschränkt
- Echtzeit-Analyse: Online-Datenverarbeitung direkt im Anschluss zur Datenaufnahme
- Anregung: NIR-Laser, 750-1500 nm - um eine hohe Eindringtiefe zu erreichen, wird eine langwellige Beleuchtung für die Bildgebung und fs-Ablation gewählt, um insbesondere Streuverluste im Gewebe zu minimieren.

Der neue Workflow, in dem das Lasermikroskop und das Verfahren gemäß der Erfindung die wesentlichen Hilfsmittel sind, hat die folgenden wesentlichen Vorteile:
- Pathologische Gewebestrukturen können in vivo detektiert und visualisiert werden, so dass eine Abgrenzung zum umgebenden gesunden Gewebe sichtbar gemacht werden kann.
- Pathologische Gewebestrukturen können gezielt mit µm-Ortsauflösung entfernt werden, auch in 3D und umgeben von gesundem Gewebe.
- Der neue Workflow ist auch für kritische Operationen an physiologisch wichtigen Strukturen geeignet, da mit extrem hoher Präzision operiert werden kann und Zielstrukturen kontrastreich dargestellt werden können. Auf Kontrastmittel wird verzichtet.
- Da die Untersuchung direkt im OP erfolgen kann, ermöglicht die Methode die Einsparung von Zeit und Geld, da auf eine Biopsieentnahme und Begutachtung verzichtet werden kann. Da der Erfolg der OP sofort geprüft werden kann, können Wiederholungs-OPs vermieden werden, was zu wesentlichen Kostenersparnissen in der operativen Patientenversorgung führen kann.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Lasermikroskops 1 mit zwei separaten Laserquellen 10 und 20 für Anregung und Ablation, einem CARS-Detektor 61 in Transmission und einem CARS-Detektor 62 in Reflexion.
Figur 2: Selektives Abtragen einer Ablagerung 82 von einer Arterienwand 81.
Figur 3: Weiteres Ausführungsbeispiel des Lasermikroskops 1 mit einer gemeinsamen Laserquelle 10=20 für Anregung und Ablation sowie einem mehrstufigen CARS-Detektor 62 in Reflexion.
Figur 4: Prüfung der Verlässlichkeit 31a-39a eines multivariaten Klassifizierers 31-39 durch Überlagerung mit Testrauschen 65.

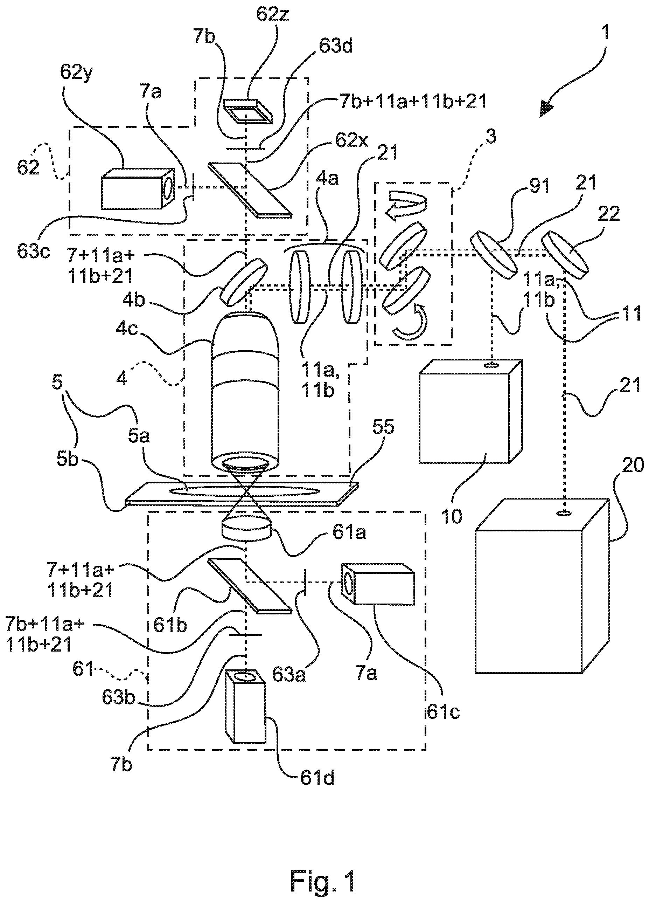

Figur 1 zeigt ein erstes Ausführungsbeispiel eines Lasermikroskops 1 gemäß der Erfindung. Eine erste Laserquelle 10 emittiert einen Anregungsstrahl 11 aus Pulsen 11a einer ersten Wellenlänge und Pulsen 11b einer zweiten Wellenlänge, wobei die Differenz zwischen den Wellenlängen der Pulse 11a und 11b zur Frequenz einer Schwingung in biologischem Probenmaterial 5a korrespondiert. Ein dichromatischer Strahlteiler 91 lenkt den Anregungsstrahl 11 in Richtung der Scanoptik 3. Eine zweite Laserquelle 20 emittiert einen Ablationsstrahl 21 aus Pulsen einer weiteren Wellenlänge. Der Ablationsstrahl 21 ist über einen Spiegel 22 und den dichromatischen Strahlteiler 91 ebenfalls in die Scanoptik 3 geführt.

Von der Scanoptik 3 werden der Anregungsstrahl 11 und der Ablationsstrahl 21 gemeinsam in die Fokussieroptik 4 geführt, welche ein Scan- und Tubuslinsensystem 4a, einen weiteren dichromatischen Strahlteiler 4b und ein Objektiv 4c umfasst. Die Strahlen 11 und 21werden gemeinsam auf das biologische Probenmaterial 5a fokussiert, das als dünne Schicht auf einem Objektträger 5b aufgebracht ist und gemeinsam mit dem Objektträger 5b die Probe 5 bildet. Die Oberfläche 55 der Probe 5 ist hier näherungsweise plan.

Ein Teil des auf die Probe 5 eingestrahlten Lichts 11a, 11b, 21 sowie des von der Probe 5 kohärent Raman-gestreuten Lichts 7 wird transmittiert und gelangt in einen ersten multimodalen CARS-Detektor 61. Im CARS-Detektor 61 passiert das gesamte Licht 7, 11a, 11b, 21 zunächst einen Kondensor 61a und wird in einen parallelen Strahlengang umgewandelt. Ein dichromatischer Strahlteiler 61b separiert das kohärente anti-Stokessche-Raman-Streulicht 7a ab und leitet dieses über einen dielektrischen Filter 63a, der insbesondere Restanteile aller Laserstrahlen 11a, 11b und 21 zurückhält, zu einem ersten Photomultiplier 61c. Das vom Strahlteiler 61b transmittierte Licht enthält einen weiteren Signalanteil 7b, der auf Zwei-Photonen-Anregungs-Fluoreszenz (TPEF), Zweite-Harmonische-Erzeugung (SHG) oder einen anderen frei wählbaren optischen Effekt zurückgeht. Dieser Signalanteil 7b wird mit einem weiteren dielektrischen Filter 63b von den Laserstrahlen 11a, 11b, 21 absepariert und auf einen zweiten Photomultiplier 61d geleitet. Wird der dielektrische Filter 63b entfernt, kann optional das Laserlicht 11a, 11b, 21 mit dem zweiten Photomultiplier 61d auf Intensitätsschwankungen überwacht werden.

Die dielektrischen Filter 63a und 63b haben typischerweise für die verwendeten Laserwellenlängen eine optische Dichte um 6. Sie können optional ergänzt werden durch einen weiteren, in Figur 1 nicht eingezeichneten, Kurzpassfilter, der zwischen dem Kondensor 61a und dem dichromatischen Strahlteiler 61b angeordnet ist.

Das von der Probe reflektierte Licht 7, 11a, 11b, 21 passiert den Strahlteiler 4b und gelangt in den zweiten multimodalen CARS-Detektor 62. In dem zweiten CARS-Detektor 62 wird mit einem dichromatischen Strahlteiler 62x der Raman-gestreute Anteil 7a des Lichts absepariert und über einen dielektrischen Filter 63c, der insbesondere Restanteile aller Laserstrahlen 11a, 11b und 21 zurückhält, auf einen Photomultiplier 62y geleitet. Analog zum in der Transmissionskonfiguration betriebenen ersten CARS-Detektor 61 enthält das vom Strahlteiler 62x transmittierte Licht den Signalanteil 7b. Dieser Signalanteil 7b wird mit einem weiteren dielektrischen Filter 63d von den Laserstrahlen 11a, 11b, 21 absepariert und gelangt auf eine Photodiode 62z. Wird der dielektrische Filter 63d entfernt, kann die Photodiode 62z genutzt werden, um die Laserstrahlen 11a, 11b und 21 auf Intensitätsschwankungen zu überwachen oder auch beispielsweise die Raman-Spektren auf die Gesamtintensität zu normieren. Die Photodiode 62z ist hierfür auf Grund ihres größeren Dynamikumfangs besser geeignet als ein Photomultiplier 61a, 61b, 62y. Zusätzlich kann die Photodiode 62z mit einem passenden Filter für eine Laserwellenlänge zur SRS-Detektion in Kombination mit einem Lock-In-Verstärker oder einem *tuned amplifier* verwendet werden.

Als Photomultiplier 61a, 61b und 62y können herkömmliche Photomultiplier mit Sekundärelektronenvervielfachern zum Einsatz kommen. Alternativ können stattdessen Hybriddetektoren verwendet werden. In derartigen Hybriddetektoren werden in einer Kathode, die beispielsweise aus Gallium-Arsenid-Phosphid bestehen kann, Primärelektronen erzeugt. Die Primärelektronen werden dann durch eine im Vergleich zu herkömmlichen Photomultipliern deutlich höhere Spannung (etwa 5-10 kV) auf ein Material beschleunigt, das Sekundärelektronen freisetzt. Die Sekundärelektronen werden anschließend auf eine Diode geleitet und von dieser Diode in einen Strompuls umgewandelt.

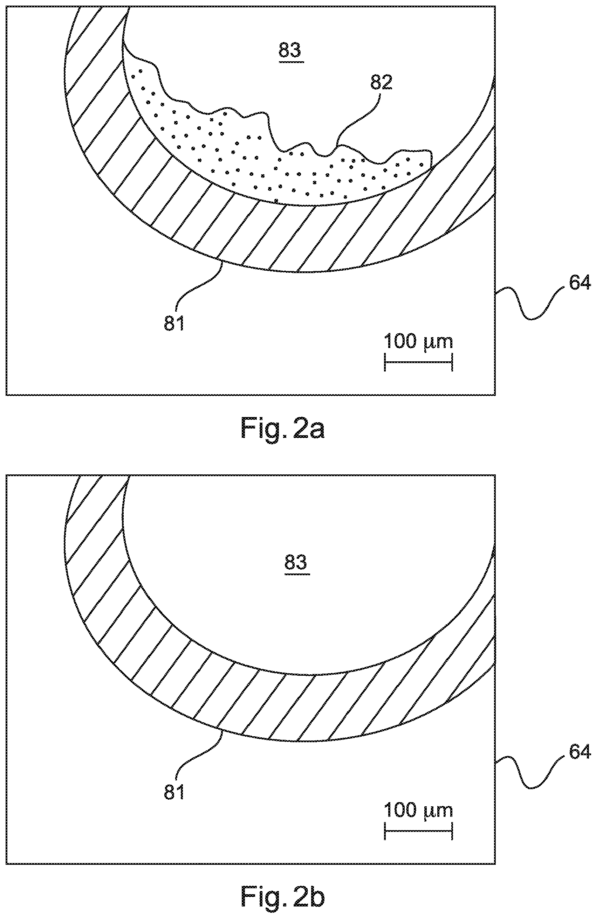

Figur 2 verdeutlicht das selektive Abtragen mit dem Ablations strahl 21. Figur 2a zeigt schematisch ein erstes, mit dem Lasermikroskop 1 gemäß Figur 1 aufgenommenes Bild 64 eines dünnen Schnitts einer Arterienwand 81. Im Inneren 83 der Arterie haben sich Ablagerungen 82 an der Innenseite der Arterienwand 81 angelagert.

Figur 2b zeigt schematisch ein weiteres Bild 64 des gleichen Bildfeldes nach dem selektiven Abtragen der Ablagerungen 82 mit dem Ablations strahl 21. Die Arterienwand 81 selbst ist unbeschädigt.

Die der schematischen Figur 2 zu Grunde liegenden realen CARS-Aufnahmen für eine Schwingungsresonanz von 2850 cm⁻¹ sind als "Proof of Concept" für die prinzipielle Machbarkeit eines selektiven Gewebeabtrags zu verstehen. In der realen in-vivo-Anwendung liegt die Probe einschließlich der zu ablatierenden Strukturen nicht als dünner Schnitt vor, sondern als dreidimensionales Objekt.

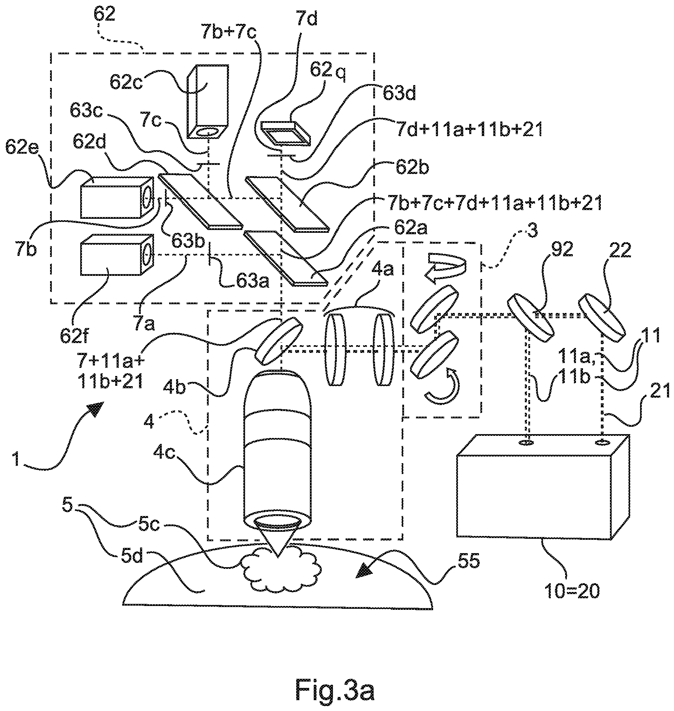

Ein an die reale in-vivo-Anwendung angepasstes Lasermikroskop 1 ist in Figur 3a skizziert. Im Unterschied zu Figur 1 ist hier ein einziger Laser 10=20 die gemeinsame Quelle für den Anregungsstrahl 11 und den Ablationsstrahl 21. Dieser gemeinsame Laser 10=20 ist deutlich kompakter als die Anordnung aus zwei separaten Lasern 10, 20 gemäß Figur 1.

Weiterhin im Unterschied zu Figur 1 hat der Ablationsstrahl 21 eine Wellenlänge, die auch im Anregungsstrahl 11 enthalten ist. Jedoch ist die Polarisationsrichtung des Ablationsstrahls 21 orthogonal zur Polarisationsrichtung des Anregungsstrahls 11. Daher sind der Anregungsstrahl 11 und der Ablationsstrahl 21 über einen polarisationserhaltenden Strahlteiler 92 zusammengeführt.

Der Anregungsstrahl 11 und der Ablationsstrahl 21 werden analog zu Figur 1 über die gemeinsame Scanoptik 3 und die gemeinsame Fokussieroptik 4 zur Probe 5 geführt. Die Probe 5 ist hier ein dreidimensionales Gewebeobjekt 5d, auf dem eine zu ablatierende Struktur 5c angedeutet ist. Dementsprechend ist auch die Oberfläche 55 der Probe 5 dreidimensional.

Im Unterschied zu Figur 1 ist die Probe 5 nicht durchsichtig. Daher kann nur in Reflexion gemessen werden. Das von der Probe 5 reflektierte Licht 11a, 11b, 21 passiert gemeinsam mit dem von der Probe 5 generierten Signallicht 7 den Strahlteiler 4b der Fokussieroptik 4 und gelangt in den einzigen multimodalen CARS-Detektor 62. In diesem CARS-Detektor 62 werden die verschiedenen Signale, d.h. das Raman-gestreute Licht 7a, SHG-Signale 7b, TPEF-Signale 7c, ein weiterer Signalanteil 7d, sowie das Laserlicht 11a, 11b, 21 mit mehreren kaskadierten dichromatischen Strahlteilern 62a, 62b und 62d sowie passenden dielektrischen Filtern 63a, 63b, 63c und 63d absepariert.

Der erste dichromatische Strahlteiler 62a spaltet einen ersten Wellenlängenanteil 7a des Signallichts 7 ab und leitet diesen über den dielektrischen Filter 63a zum Photomultiplier 62f. Die übrigen Wellenlängenanteile 7b und 7c, z.B. TPEF und SHG, das reflektierte Anregungslicht 11a, 11b sowie der reflektierte Ablationsstrahl 21 passieren den ersten dichromatischen Strahlteiler 62a ungehindert in Vorwärtsrichtung (in Figur 3a vertikal nach oben).

Der zweite dichromatische Strahlteiler 62b spaltet einen zweiten Wellenlängenanteil 7b und einen dritten Wellenlängenanteil 7c des Signallichts 7 ab. Diese beiden Wellenlängenanteile 7b und 7c werden sodann in einem dritten dichromatischen Strahlteiler 62d voneinander getrennt und über dielektrische Filter 63b und 63c, die jeweils nur den Wellenlängenanteil 7b bzw. 7c passieren lassen und weitere spektrale Komponenten ausblenden, den Photomultipliern 62e bzw. 62c zugeleitet. Das reflektierte Anregungslicht 11a, 11b sowie der reflektierte Ablationsstrahl 21 passieren den zweiten dichromatischen Strahlteiler 62b zusammen mit einem weiteren Signalanteil 7d wiederum ungehindert. Der dielektrische Filter 63d blendet das Laserlicht 11a, 11b, 21 aus, so dass nur der Signalanteil 7d auf die Photodiode 62q gelangt. Optional kann der dielektrische Filter 63d entfernt werden, so dass die Photodiode 62q genutzt werden kann, um die Intensität des Laserlichts 11a, 11b, 21 zu messen. Diese Intensität kann dann analog zu Figur 1 zur Kontrolle und zur Normierung der Raman- und anderen nichtlinearen Signale auf die Gesamtintensität herangezogen werden.

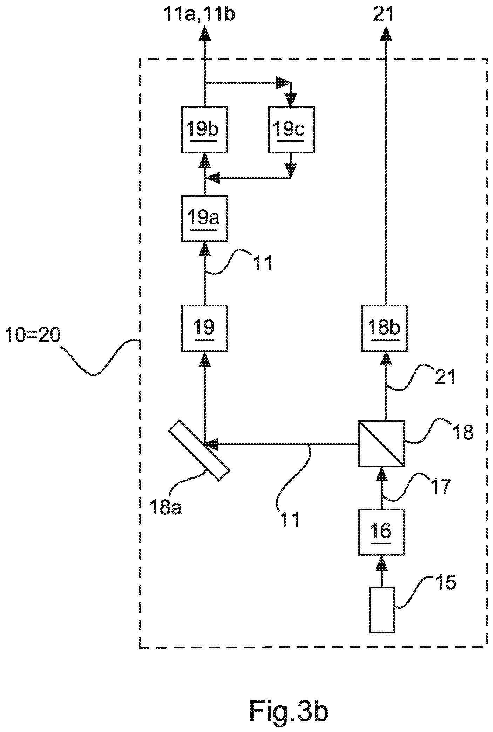

Der Vorteil des CARS-Detektors 62 gemäß Figur 3 ist, dass hiermit vier Wellenlängenanteile 7a, 7b, 7c und 7d des Signallichts 7, z.B. CARS, SHG, TPEF und ein weiterer frei wählbarer Signalanteil, gleichzeitig registriert werden können. Diese vier Wellenlängenanteile 7a, 7b, 7c und 7d können von der Probe echt gleichzeitig generiert werden. Sie können aber auch nacheinander generiert werden, beispielsweise durch Durchstimmen der Wellenlängen der Pulse 11a und 11b, die den Anregungsstrahl 11 bilden.

Figur 3b zeigt den inneren Aufbau des gemeinsamen Lasers 10=20. Dieser Laser 10=20 zeichnet sich dadurch aus, dass die meisten optischen Komponenten sowohl für den Anregungsstrahl 11 als auch für den Ablationsstrahl 21 genutzt werden. Der Strahl aus einem gemeinsamen Dauerstrich-Pumplaser 15 ist in einen optischen Oszillator 16 geführt und wird dort in Pulse mit der für den Ablationsstrahl 21 passenden Pulsdauer umgewandelt. Der aus diesen Pulsen gebildete Strahl 17 ist vom optischen Oszillator 16 zu einem Strahlteiler 18 geführt.

Der Strahlteiler 18 lässt den Ablationsstrahl 21 in Vorwärtsrichtung (in Figur 3b vertikal nach oben) passieren. Der Ablationsstrahl 21 wird mit einem Verstärker 18b verstärkt und tritt schließlich aus dem Laser 10=20 aus.

Der Anregungsstrahl 11 wird seitlich zu einem Spiegel 18a und von dort zu einem spektralen Filter 19 gelenkt. Das spektrale Filter 19 führt auf Grund der Heisenberg'schen Unschärferelation dazu, dass sich die Pulse des Anregungsstrahls 11 deutlich verlängern. Der Anregungsstrahl 11 wird zunächst in einem Verstärker 19a verstärkt.

In einer photonischen Kristallfaser 19b werden nun aus dem Anregungsstrahl 11, der hinter dem spektralen Filter 19 im Wesentlichen nur eine Frequenz ω₀ aufweist, durch Vierwellenmischung zwei weitere Wellenlängen erzeugt, Signal und Idler. Durch den nichtlinearen Prozess der Vierwellenmischung generieren zwei Photonen des Anregungsstrahls mit Frequenz ω₀ ein Paar aus einem Signal-Photon mit Frequenz ω₀+Δω und einem Idler-Photon mit Frequenz ω₀-Δω. Die photonische Kristallfaser 19b ist dergestalt mikrostrukturiert, dass hierbei trotz der Dispersion in der Kristallfaser 19b die Energie- und Impulserhaltung gegeben sind.

In der photonischen Kristallfaser 19b werden breitbandig Photonenpaare ω₀±Δω mit vielen Frequenzverschiebungen Δω erzeugt. Damit genau eine Frequenzverschiebung Δω bevorzugt wird und somit aus dem Laser 10=20 Pulse 11a, 11b mit genau zwei Frequenzen (und somit zwei Wellenlängen) austreten, wird ein Teil des aus der photonischen Kristallfaser 19b austretenden Lichts über eine resonante Kavität 19c in die photonische Kristallfaser 19b zurückgekoppelt. Die Kavität 19c ist immer nur auf einer Frequenz resonant, also entweder auf der Frequenz ω₀+Δω oder auf der Frequenz ω₀-Δω. Indem somit die Frequenzverschiebung Δω festgelegt wird, werden beide Frequenzen des Photonenpaars ω₀±Δω festgelegt, das bevorzugt gebildet werden soll. Die Frequenzverschiebung Δω kann über die Resonanz der Kavität 19c durchgestimmt werden.

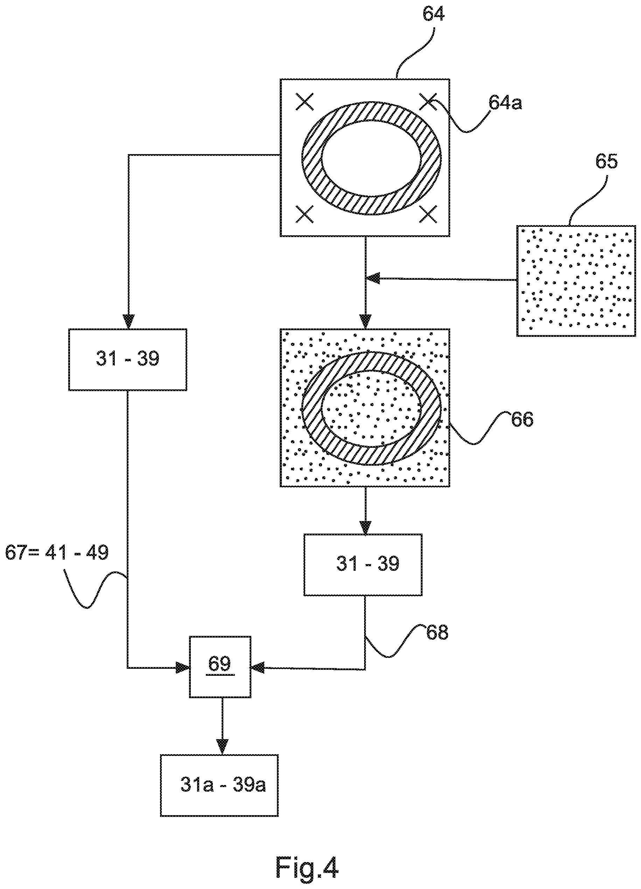

Figur 4 zeigt schematisch, wie Klassifizierer 31-39 dahingehend begutachtet werden können, ob sie zur Erkennung einer vorgegeben Struktur oder Eigenschaft 41-49 in einem konkreten, mit Rauschen 64a behafteten Bild 64 taugen, welches mit dem Lasermikroskop 1 aufgenommen wurde. Das Bild 64 wird mit zusätzlichem Testrauschen 65 zu einem Testbild 66 verändert. Der Klassifizierer 31-39 wird nun einerseits auf das ursprüngliche Bild 64 angewendet und liefert ein Ergebnis 67, welches die Feststellung beinhaltet, ob gemäß dem ursprünglichen Bild 64 die Struktur oder Eigenschaft 41-49 auf bzw. in der Probe 5 vorhanden ist. Der Klassifizierer 31-39 wird parallel auf das Testbild 66 angewendet und liefert ein Ergebnis 68. Die beiden Ergebnisse werden in Block 69 verglichen, und aus diesem Vergleich wird die Verlässlichkeit 31a-39a des Klassifizierers 31-39 ausgewertet. Diese Verlässlichkeit 31a-39a kann insbesondere davon abhängen, ab welcher Stärke des zusätzlichen Rauschens 65a der Klassifizierer 31-39 seine Meinung ändert. Reicht hierfür bereits ein geringfügiges zusätzliches Rauschen aus, so kann hieraus der Schluss gezogen werden, dass möglicherweise schon das ursprüngliche Rauschen 64a im Bild 64 das vom Klassifizierer 31-39 gelieferte Ergebnis 67 verfälscht hat. Ändert sich die Meinung des Klassifizierers 31-39 hingegen auch bei starkem Rauschen nicht, kann hieraus geschlossen werden, dass der Klassifizierer besonders resistent gegen Rauschen und somit besonders verlässlich ist.

Die Offenbarung umfasst nach dem zuvor Beschriebenen auch das folgende Beispiel:
Ein Lasermikroskop, umfassend mindestens eine erste Laserquelle, die mindestens einen, insbesondere gepulsten, Anregungsstrahl emittiert, eine Scanoptik, die zum Rastern des Anregungsstrahls über die Oberfläche einer Probe ausgebildet ist, eine Fokussieroptik, die zur Fokussierung des Anregungsstrahls auf die Probe ausgebildet ist, sowie mindestens einen Detektor für Licht, das die Probe auf Grund eines optischen Effekts in Antwort auf den Anregungsstrahl emittiert, wobei zwecks lokaler Ablation des Materials der Probe eine zweite Laserquelle für einen gepulsten Ablationsstrahl vorgesehen ist und wobei der Ablationsstrahl über die Scanoptik und die Fokussieroptik zur Probe geführt ist.

### Bezugszeichenliste

- 1: Lasermikroskop
- 10: erste Laserquelle für Anregungsstrahl 11
- 11: Anregungsstrahl
- 11a, 11b: Pulse des Strahls 11 mit unterschiedlichen Wellenlängen
- 15: gemeinsamer Dauerstrich-Pumplaser für Laser 10, 20
- 16: optischer Oszillator
- 17: Strahl aus optischem Oszillator 16
- 18: Strahlteiler zur Aufteilung von Strahl 17 in Strahlen 11, 21
- 18a: Spiegel zur Umlenkung des Anregungsstrahls 11
- 18b: Verstärker für Ablationsstrahl 21
- 19: spektrales Filter für Anregungsstrahl 11
- 19a: Verstärker für Anregungsstrahl 11
- 19b: photonische Kristallfaser zur Bildung von Photonenpaaren ω₀±Δω
- 19c: resonante Kavität zur Selektion einer Frequenzverschiebung Δω
- 20: zweite Laserquelle für Ablationsstrahl 21
- 21: Ablationsstrahl
- 22: Spiegel für Ablationsstrahl 21
- 3: Scanoptik bzw. Mittel zum Rastern
- 31-39: multivariate Klassifizierer
- 31a-39a: Verlässlichkeiten der multivariaten Klassifizierer 31-39
- 4: Fokussieroptik
- 4a: Scan- und Tubuslinsensystem
- 4b: Strahlteiler in Fokussieroptik 4
- 4c: Objektiv
- 41-49: Eigenschaften, auf die die Klassifizierer 31-39 sensitiv sind
- 5: Probe
- 5a: dünner Schnitt biologischen Materials
- 5b: Objektträger
- 5c: zu ablatierende Struktur auf Probe 5
- 5d: dreidimensionales Objekt als Probe 5
- 55: Oberfläche der Probe 5
- 61: CARS-Detektor in Transmission
- 61a: Kondensor
- 61b: Strahlteiler in CARS-Detektor 61
- 61c, 61d: Photomultiplier in CARS-Detektor 61
- 62: CARS-Detektor in Reflexion
- 62a: erster dichromatischer Strahlteiler zur Abspaltung von 7a
- 62b: zweiter dichromatischer Strahlteiler zur Abspaltung von 7b, 7c
- 62c: Photomultiplier für Wellenlängenanteil 7c
- 62d: dritter dichromatischer Strahlteiler, trennt 7b von 7c
- 62e: Photomultiplier für Wellenlängenanteil 7b
- 62f: Photomultiplier für Wellenlängenanteil 7a
- 62q: Photodiode für Wellenlängenanteil 7d
- 62x: Strahlteiler in einfachem CARS-Detektor 62
- 62y: Photomultiplier in einfachem CARS-Detektor 62
- 62z: Photodiode in einfachem CARS-Detektor 62
- 63a-63d: dielektrische Filter
- 64: vom Lasermikroskop 1 aufgenommenes Bild
- 64a: Rauschen in Bild 64
- 65: Testrauschen
- 66: Testbild, generiert aus Bild 64 und Testrauschen 65
- 67: Ergebnis von Klassifizierer 31-39 an Bild 64
- 68: Ergebnis von Klassifizierer 31-39 an Testbild 66
- 69: Vergleich der Ergebnisse 67, 68
- 7: von der Probe 5 generierte Antwort
- 7a-7d: Wellenlängenanteile der Antwort 7
- 81: Arterienwand
- 82: Ablagerungen an Arterienwand 81
- 83: Inneres der Arterie, begrenzt von Arterienwand 81
- 91: dichromatischer Strahlteiler zur Zusammenführung von 11, 21
- 92: polarisationserhaltender Strahlteiler zur Zusammenführung von 11, 21
- ω₀: Frequenz des Anregungsstrahls 11 hinter spektralem Filter 19
- Δω: Frequenzverschiebung in photonischer Kristallfaser 19b

## Patentansprüche

1. Lasermikroskop (1), umfassend einen gemeinsamen Laser (10, 20), der mindestens einen Anregungsstrahl (11) emittiert, eine Scanoptik (3), die zum Rastern des Anregungsstrahls (11) über die Oberfläche (55) einer Probe (5) ausgebildet ist, eine Fokussieroptik (4), die zur Fokussierung des Anregungsstrahls (11) auf die Probe (5) ausgebildet ist, sowie mindestens einen Detektor (61, 62) für Licht (7, 7a-7d), das die Probe (5) auf Grund eines optischen Effekts in Antwort auf den Anregungsstrahl (11) emittiert, wobei zwecks lokaler Ablation des Materials der Probe (5) der gemeinsame Laser einen gepulsten Ablationsstrahl (21) emittiert, wobei der Ablationsstrahl (21) über die Scanoptik (3) und die Fokussieroptik (4) zur Probe (5) geführt ist, wobei der gemeinsame Laser (10, 20) einen gemeinsamen Dauerstrich-Pumplaser (15) umfasst, wobei der Anregungsstrahl Pulse (11a, 11b) mindestens zweier verschiedener Wellenlängen umfasst, wobei der gemeinsame gepulste Laser einen optischen Oszillator (16), ein spektrales Filter (19) und einen Strahlteiler (18) umfasst, wobei der Strahl aus dem gemeinsamen Dauerstrich-Pumplaser (15) in den optischen Oszillator (16) geführt ist und der Strahlteiler (18) den vom optischen Oszillator (16) emittierten gepulsten Strahl (17) in den Anregungsstrahl (11) einerseits und in den Ablationsstrahl (21) andererseits aufteilt, wobei der Anregungsstrahl (11) durch das spektrale Filter (19) geführt ist und die mindestens zwei verschiedenen Wellenlängen des Anregungsstrahls (11) durch eine Vier-Wellen-Mischung des durch das spektrale Filter (19) geführten Anregungslichts erzeugt sind.

2. Lasermikroskop (1) nach Anspruch 1, **dadurch gekennzeichnet, dass** mindestens eine Wellenlänge des Ablationsstrahls (21) mit mindestens einer Wellenlänge des Anregungsstrahls (11) deckungsgleich ist.

3. Lasermikroskop nach einem der Ansprüche 1 bis 2, **dadurch gekennzeichnet, dass** der Detektor (61, 62) dazu ausgebildet ist, aus dem Anregungsstrahl (11) durch kohärente Raman-Streuung, insbesondere durch CARS und SRS, gebildetes Licht zu detektieren.

4. Lasermikroskop (1) nach einem der Ansprüche 1 bis 3, **dadurch gekennzeichnet, dass** die Wellenlänge des Anregungsstrahls (11), und/oder die Wellenlänge des Ablationsstrahls (21), zwischen 750 nm und 3 µm, bevorzugt zwischen 750 nm und 2 µm und ganz besonders bevorzugt zwischen 750 nm und 1,5 µm, beträgt.

5. Lasermikroskop (1) nach einem der Ansprüche 1 bis 4, **dadurch gekennzeichnet, dass** der Detektor (61, 62) für Licht (7, 7a-7d) sensitiv ist, das die Probe (5) auf Grund eines nichtlinearen optischen Effekts in Antwort auf den Anregungsstrahl (11) emittiert.

6. Verfahren zum Betreiben eines Lasermikroskops (1), wobei in dem Lasermikroskop (1) ein Anregungsstrahl (11) und ein gepulster Ablationsstrahl (21), die von einem gemeinsamen Laser (10, 20) emittiert werden, zu einer Probe (5) geführt sind, wobei der gemeinsame gepulste Laser (10, 20) einen optischen Oszillator (16), ein spektrales Filter (19), einen Strahlteiler (18) und einen gemeinsamen Dauerstrich-Pumplaser (15) umfasst, wobei der Strahl aus dem gemeinsamen Dauerstrich-Pumplaser (15) in den optischen Oszillator (16) geführt wird und der Strahlteiler (18) den vom optischen Oszillator (16) emittierten gepulsten Strahl (17) in den Anregungsstrahl (11) einerseits und in den Ablationsstrahl (21) andererseits aufteilt, wobei der Anregungsstrahl (11) Pulse (11a, 11b) mindestens zweier verschiedener Wellenlängen umfasst, wobei der Anregungsstrahl (11) durch das spektrale Filter (19) geführt wird und die mindestens zwei verschiedenen Wellenlängen des Anregungsstrahls (11) durch eine Vier-Wellen-Mischung des durch das spektrale Filter (19) geführten Anregungslichts erzeugt werden, wobei jeweils Mittel (3) zum Rastern des Anregungsstrahls (11) und des Ablationsstrahls (21) über die Probe vorgesehen sind und wobei mindestens ein Detektor (61, 62) für Licht, das die Probe (5) auf Grund eines nichtlinearen optischen Effekts in Antwort auf den Anregungsstrahl (11) emittiert, vorgesehen ist, wobei der gepulste Ablationsstrahl (21) dazu ausgebildet ist, durch sein momentanes elektrisches Feld die Elektronenhüllen von Atomen des Materials der Probe (5) teilweise zu ionisieren, wobei die Pulsdauer des Ablationsstrahls (21) zwischen 35 fs und 300 fs, bevorzugt zwischen 100 fs und 300 fs, gewählt wird.

7. Verfahren nach Anspruch 6, **dadurch gekennzeichnet, dass** die Pulsdauer des Anregungsstrahls (11) um einen Faktor zwischen 10 und 1000 länger gewählt wird als die Pulsdauer des Ablationsstrahls (21).

8. Verfahren nach einem der Ansprüche 6 bis 7, **dadurch gekennzeichnet, dass** die Pulsdauer des Anregungsstrahls (11) aus einem Bereich zwischen 1 ps und 100 ps, bevorzugt zwischen 5 ps und 40 ps und ganz besonders bevorzugt zwischen 10 ps und 20 ps, gewählt wird.

9. Verfahren nach einem der Ansprüche 6 bis 8, **dadurch gekennzeichnet, dass** die Repetitionsrate der Pulse des Anregungsstrahls (11) zwischen 1 MHz und 40 MHz, bevorzugt zwischen 1 MHz und 20 MHz, gewählt wird.

10. Verfahren nach einem der Ansprüche 6 bis 9, **dadurch gekennzeichnet, dass** die Repetitionsrate der Pulse des Ablationsstrahls (21) zwischen 100 kHz bis 10 MHz, bevorzugt zwischen 100 kHz und 1 MHz, gewählt wird.

11. Verfahren nach einem der Ansprüche 6 bis 10, **dadurch gekennzeichnet, dass** das durch Rastern des Anregungsstrahls (11) erhaltene Bild (64) durch Anwendung mindestens eines multivariaten Klassifizierers (31-39) daraufhin ausgewertet wird, ob die Probe (5) eine vorgegebene Struktur oder Eigenschaft (41-49) aufweist.

12. Verfahren nach Anspruch 11, **dadurch gekennzeichnet, dass** das Bild (64) durch Überlagerung von Rauschen (65) zu einem Testbild (66) verändert wird und aus dem Vergleich (69) der Ergebnisse, die der Klassifizierer (31-39) bei Anwendung auf das Bild (64) einerseits (67) und auf das Testbild (66) andererseits (68) liefert, die Verlässlichkeit (31a-39a) des Klassifizierers (31-39) ausgewertet wird.

## Claims

1. Laser microscope (1), comprising a common laser (10, 20) emitting at least one excitation beam (11), a scan optics (3) configured for scanning the excitation beam (11) over the surface (55) of a sample (5), a focusing optics (4) configured for focusing the excitation beam (11) onto the sample (5), and at least one detector (61, 62) for light (7, 7a-7d) emitted by the sample (5) due to an optical effect in response to the excitation beam (11), wherein the common laser emits a pulsed ablation beam (21) for the purposes of local ablation of the material of the sample (5), wherein the ablation beam (21) is guided via the scan optics (3) and the focusing optics (4) to the sample (5), wherein the common laser (10, 20) comprises a common continuous-wave pump laser (15), wherein the excitation beam comprises pulses (11a, 11b) of at least two different wavelengths, wherein the common pulsed laser comprises an optical oscillator (16), a spectral filter (19) and a beam splitter (18), wherein the beam is guided from the common continuous-wave pump laser (15) into the optical oscillator (16) and the beam splitter (18) splits the pulsed beam (17) emitted by the optical oscillator (16) into the excitation beam (11) on the one hand and into the ablation beam (21) on the other hand, wherein the excitation beam (11) is guided through the spectral filter (19) and the at least two different wavelengths of the excitation beam (11) are generated by a four-wave mixture of the excitation light guided through the spectral filter (19).

2. Laser microscope (1) according to Claim 1, **characterized in that** at least one wavelength of the ablation beam (21) is congruent with at least one wavelength of the excitation beam (11).

3. Laser microscope according to one of Claims 1 to 2, **characterized in that** the detector (61, 62) is configured to detect light formed by coherent Raman radiation, in particular by CARS and SRS, from the excitation beam (11) .

4. Laser microscope (1) according to one of Claims 1 to 3, **characterized in that** the wavelength of the excitation beam (11) and/or the wavelength of the ablation beam (21) is between 750 nm and 3 µm, preferably between 750 nm and 2 µm and most preferably between 750 nm and 1.5 µm.

5. Laser microscope (1) according to one of Claims 1 to 4, **characterized in that** the detector (61, 62) is sensitive to light (7, 7a-7d) emitted by the sample (5) due to a non-linear optical effect in response to the excitation beam (11).

6. Method for operating a laser microscope (1), wherein in the laser microscope (1) an excitation beam (11) and a pulsed ablation beam (21), which are emitted by a common laser (10, 20), are guided to a sample (5), wherein the common pulsed laser (10, 20) comprises an optical oscillator (16), a spectral filter (19), a beam splitter (18) and a common continuous-wave pump laser (15), wherein the beam is guided from the common continuous-wave pump laser (15) into the optical oscillator (16) and the beam splitter (18) splits the pulsed beam (17) emitted by the optical oscillator (16) into the excitation beam (11) on the one hand and into the ablation beam (21) on the other hand, wherein the excitation beam (11) comprises pulses (11a, 11b) of at least two different wavelengths, wherein the excitation beam (11) is guided through the spectral filter (19) and the at least two different wavelengths of the excitation beam (11) are generated by a four-wave mixture of the excitation light guided through the spectral filter (19), wherein means (3) each for scanning the excitation beam (11) and the ablation beam (21) over the sample are provided and wherein at least one detector (61, 62) is provided for light emitted by the sample (5) due to a non-linear optical effect in response to the excitation beam (11), wherein the pulsed ablation beam (21) is configured to partially ionize the electron shells of atoms of the material of the sample (5) by its instantaneous electric field, wherein the pulse duration of the ablation beam (21) is selected between 35 fs and 300 fs, preferably between 100 fs and 300 fs.

7. Method according to Claim 6, **characterized in that** the pulse duration of the excitation beam (11) is selected to be longer by a factor of between 10 and 1000 than the pulse duration of the ablation beam (21).

8. Method according to one of Claims 6 to 7, **characterized in that** the pulse duration of the excitation beam (11) is selected from a range between 1 ps and 100 ps, preferably between 5 ps and 40 ps and most preferably between 10 ps and 20 ps.

9. Method according to one of Claims 6 to 8, **characterized in that** the repetition rate of the pulses of the excitation beam (11) is selected between 1 MHz and 40 MHz, preferably between 1 MHz and 20 MHz.

10. Method according to one of Claims 6 to 9, **characterized in that** the repetition rate of the pulses of the ablation beam (21) is selected between 100 kHz to 10 MHz, preferably between 100 kHz and 1 MHz.

11. Method according to one of Claims 6 to 10, **characterized in that** the image (64) obtained by scanning of the excitation beam (11) is then evaluated by application of at least one multivariate classifier (31-39) as to whether the sample (5) comprises a specified structure or property (41-49).

12. Method according to Claim 11, **characterized in that** the image (64) is changed by superposition of noise (65) to a test image (66) and the reliability (31a-39a) of the classifier (31-39) is evaluated from the comparison (69) of the results that are provided by the classifier (31-39) when applied to the image (64) on the one hand (67) and when applied to the test image (66) on the other hand (68) .

## Revendications

1. Microscope laser (1), comprenant un laser (10, 20) commun qui émet au moins un faisceau d'excitation (11), une optique de balayage (3) qui est conçue pour effectuer le tramage du faisceau d'excitation (11) sur la surface (55) d'un échantillon (5), une optique de focalisation (4) qui est conçue pour focaliser le faisceau d'excitation (11) sur l'échantillon (5), ainsi qu'au moins un détecteur (61, 62) pour la lumière (7, 7a-7d) que l'échantillon (5) émet en raison d'un effet optique en réponse au faisceau d'excitation (11), dans lequel le laser commun émet un faisceau d'ablation pulsé (21) aux fins de l'ablation locale du matériau de l'échantillon (5), dans lequel le faisceau d'ablation (21) est guidé vers l'échantillon (5) au moyen de l'optique de balayage (3) et de l'optique de focalisation (4), dans lequel le laser (10, 20) commun comprend un laser de pompage à ondes entretenues (15) commun, dans lequel le faisceau d'excitation comprend des impulsions (11a, 11b) ayant au moins deux longueurs d'onde différentes, dans lequel le laser pulsé commun comprend un oscillateur optique (16), un filtre spectral (19) et un séparateur de faisceau (18), dans lequel le faisceau provenant du laser de pompage à ondes entretenues (15) commun est guidé dans l'oscillateur optique (16) et le séparateur de faisceau (18) divise le faisceau pulsé (17) émis par l'oscillateur optique (16) en un faisceau d'excitation (11) d'une part et un faisceau d'ablation (21) d'autre part, dans lequel le faisceau d'excitation (11) est guidé à travers le filtre spectral (19) et lesdites au moins deux longueurs d'onde différentes du faisceau d'excitation (11) sont générées par un mélange à quatre ondes de la lumière d'excitation guidée à travers le filtre spectral (19).

2. Microscope laser (1) selon la revendication 1, **caractérisé en ce qu'**au moins une longueur d'onde du faisceau d'ablation (21) coïncide avec au moins une longueur d'onde du faisceau d'excitation (11).

3. Microscope laser selon l'une des revendications 1 à 2, **caractérisé en ce que** le détecteur (61, 62) est conçu pour détecter la lumière formée à partir du faisceau d'excitation (11) par diffusion Raman cohérente, en particulier par CARS et SRS.

4. Microscope laser (1) selon l'une des revendications 1 à 3, **caractérisé en ce que** la longueur d'onde du faisceau d'excitation (11), et/ou la longueur d'onde du faisceau d'ablation (21), est comprise entre 750 nm et 3 µm, de préférence entre 750 nm et 2 µm et de manière particulièrement préférée entre 750 nm et 1,5 µm.

5. Microscope laser (1) selon l'une des revendications 1 à 4, **caractérisé en ce que** le détecteur (61, 62) est sensible à la lumière (7, 7a-7d) que l'échantillon (5) émet en raison d'un effet optique non linéaire en réponse au faisceau d'excitation (11).

6. Procédé de fonctionnement d'un microscope laser (1), dans lequel, dans le microscope laser (1), un faisceau d'excitation (11) et un faisceau d'ablation pulsé (21) qui sont émis par un laser (10, 20) commun sont guidés vers un échantillon (5), dans lequel le laser pulsé (10, 20) commun comprend un oscillateur optique (16), un filtre spectral (19), un séparateur de faisceau (18) et un laser de pompage à ondes entretenues (15) commun, dans lequel le faisceau provenant du laser de pompage à ondes continues (15) commun est guidé dans l'oscillateur optique (16) et le séparateur de faisceau (18) divise le faisceau pulsé (17) émis par l'oscillateur optique (16) en un faisceau d'excitation (11) d'une part et un faisceau d'ablation (21) d'autre part, dans lequel le faisceau d'excitation (11) comprend des impulsions (11a, 11b) ayant au moins deux longueurs d'onde différentes, dans lequel le faisceau d'excitation (11) est guidé à travers le filtre spectral (19) et lesdites au moins deux longueurs d'onde différentes du faisceau d'excitation (11) sont générées par un mélange à quatre ondes de la lumière d'excitation guidée à travers le filtre spectral (19), dans lequel il est prévu des moyens (3) respectivement destinés à effectuer le tramage du faisceau d'excitation (11) et du faisceau d'ablation (21) sur l'échantillon et dans lequel il est prévu au moins un détecteur (61, 62) pour la lumière que l'échantillon (5) émet en raison d'un effet optique non linéaire en réponse au faisceau d'excitation (11), dans lequel le faisceau d'ablation pulsé (21) est conçu pour ioniser partiellement les enveloppes électroniques des atomes du matériau de l'échantillon (5) au moyen de son champ électrique instantané, dans lequel la durée d'impulsion du faisceau d'ablation (21) est sélectionnée entre 35 fs et 300 fs, de préférence entre 100 fs et 300 fs.

7. Procédé selon la revendication 6, **caractérisé en ce que** la durée d'impulsion du faisceau d'excitation (11) est sélectionnée de manière à ce qu'elle soit plus longue que la durée d'impulsion du faisceau d'ablation (21) d'un facteur compris entre 10 et 1000.

8. Procédé selon l'une des revendications 6 à 7, **caractérisé en ce que** la durée d'impulsion du faisceau d'excitation (11) est sélectionnée dans une plage comprise entre 1 ps et 100 ps, de préférence entre 5 ps et 40 ps et de manière particulièrement préférée entre 10 ps et 20 ps.

9. Procédé selon l'une des revendications 6 à 8, **caractérisé en ce que** la fréquence de répétition des impulsions du faisceau d'excitation (11) est sélectionnée entre 1 MHz et 40 MHz, de préférence entre 1 MHz et 20 MHz.

10. Procédé selon l'une des revendications 6 à 9, **caractérisé en ce que** la fréquence de répétition des impulsions du faisceau d'ablation (21) est sélectionnée entre 100 kHz et 10 MHz, de préférence entre 100 kHz et 1 MHz.

11. Procédé selon l'une des revendications 6 à 10, **caractérisé en ce que** l'image (64) obtenue par tramage du faisceau d'excitation (11) est évaluée par application d'au moins un classificateur multivarié (31-39) pour déterminer si l'échantillon (5) présente une structure ou une propriété prédéterminée (41-49).

12. Procédé selon la revendication 11, **caractérisé en ce que** l'image (64) est modifiée par superposition de bruit (65) en une image de test (66) et la fiabilité (31a-39a) du classificateur (31-39) est évaluée à partir de la comparaison (69) des résultats que délivre le classificateur (31-39) lorsqu'il est appliqué à l'image (64) d'une part (67) et à l'image de test (66) d'autre part (68).
